# EUROPEAN PATENT SPECIFICATION

(11) **EP 2 387 886 B1**
(45) Date of publication and mention of the grant of the patent: **06.01.2016**
(21) Application number: 10005195.2
(22) Date of filing: 18.05.2010
(51) Int. Cl.: A01P 3/00, A01P 7/04, A01N 25/02, A01N 33/20, A01N 43/653

(54) **BIOCIDE COMPOSITIONS COMPRISING ISOAMYL LACTATE**
BIOZIDZUSAMMENSETZUNGEN, DIE ISOAMYLLACTAT UMFASSEN
COMPOSITIONS DE BIOCIDE COMPORTANT DU LACTATE ISOAMYLIQUE

(43) Date of publication of application: 23.11.2011
(73) Proprietor: Cognis IP Management GmbH, 40589 Düsseldorf (DE)
(72) Inventor: Merlet, Stéphanie, 40547 Düsseldorf (DE); Röder, Jürgen, 40591 Düsseldorf (DE); Busch, Stefan, 40597 Düsseldorf (DE); Meinert, Oliver, 47137 Duisburg (DE)
(74) Representative: Wallon, Alexander

(56) References cited:
- EP-A1- 1 787 516
- EP-A1- 1 961 304
- WO-A1-03/075657
- WO-A1-2005/074685
- WO-A2-2006/065935
- WO-A2-2007/079465
- WO-A2-2007/143114
- US-A1- 2008 153 757
- R. VAN HUIJSDUIJNEN ET AL: 'Induction by Salicylic Acid of Pathogenesis-related Proteins and Resistance to Alfalfa Mosaic Virus Infection in Various Plant Species' JOURNAL OF GENERAL VIROLOGY, [Online] 01 October 1986, pages 2135 - 2143, XP055089176 DOI: 10.1099/0022-1317-67-10-2135 Retrieved from the Internet: <URL:http://vir.sgmjournals.org/cgi/content /abstract/67/10/2135>

## Description

### Field of the invention

The present invention relates to the area of agrochemicals and refers to agrochemical compositions comprising isoamyl lactate and its use as a solvent for biocides as defined in the claims.

### Background of the invention

Biocides, and in particular pesticides such as fungicides, insecticides and herbicides, are important auxiliary agents for agriculture in order to protect and to increase crops yields. Depending on the various and often very specific needs a magnitude of actives exist which show very different chemical structures and behaviours. Nevertheless, it is well known from the state of the art that it remains difficult to prepare concentrates of these actives which are exhibiting a satisfying stability, especially if stored at very low or elevated temperatures over a longer period. As a matter of fact, the solutions show a strong tendency to either separate or to form crystals, which makes it necessary to re-disperse the actives in the compositions prior to every application in order to obtain a homogenous product. Due to the fact that in spray equipments, which are customarily used for the application of aqueous formulations of plant treatment agents, several filters and nozzles are present, an additional problem appears which is related to the blocking of these filters and nozzles as a result of crystallizing active compound during the application of aqueous spray liquors based on solid active compounds.

The use of certain derivatives of lactic acid, in particular lactamides is well known from the state of the art. For example, German patent application DE 4112873 A1 discloses a composition comprising a fungicide (triflorine), lactic acid dimethyl amide and an emulsifier. The use of various lactamides as solvents in agriculture is described in WO 2006/040022 A2 (Bayer), WO 2007/107745 A2 (Syngenta), or EP 1961301 A2 (Cognis). EP 1482790 B1 (Makhteshim) discloses the use of various lactate esters for inhibiting the crystallisation of biocides in agricultural compositions. In WO 06/065935 a liquid concentrate formulation of a plant growth regulator, such as a gibberellin, dissolved in a blended solvent comprised of a C1 to C4 ester of lactic acid and a C2 to C6 polyhydric alcohol is disclosed. EP 1787516 A1 relates to a sprout inhibiting composition comprising chlorpropham as an active compound and at least one lactate as a solvent, a method for preparing the sprout inhibiting composition and its use. WO 03/075657 describes a method of preventing crystallization of pesticidal compositions during application by adding a lactate ester as a crystallization preventing agent. In EP 1961304 A1 formulations are described of the emulsifiableconcentrate type, having a high herbicidal efficiency and a reduced environmental impact, containing the compound methyl (E)-4-[2-chloro-5-(4-chloro-5-difluoromethoxy-1-methylpyrazol-3-yl)-4-fluorophenoxy]-3-methoxybut-2-enoate as active principle and one or more alkyl esters of lactic acid as solvent are discloses. WO 05/074685 describes the use of a plant protection composition, comprising 2-ethylehxyl lactate, one or more agrochemical active substances dissolved therein, and optionally one or more formulation aids, for the control of harmful organisms in paddy rice crops; and plant prediction compositions comprising 2-ethylhexyl lactate and specific agrochemical active substance.

Products generally found in the market present either a limited content of biocides and /or hazardous labelling and a non favourable eco-toxicological profile.

The problem underlying the present invention has been to identify suitable new solvents for developing new biocide compositions with equal or higher contents of actives than obtainable in the market. The new solvents need to be safe and environmental friendly and should allow obtaining concentrated biocide compositions (on average more than 15 % active matter) regardless of the chemical structure of the biocide, in other words they need to be excellent solvents for a wide range of herbicides, insecticides and fungicides. Finally, another object of the invention has been to design emulsifiable concentrates formulations with specific co-solvents and emulsifier system providing superior emulsion stability, in particular with respect to opacity and layering.

### Detailed description of the invention

The present invention refers to agrochemical compositions, comprising
(a) Isoamyl lactate;
(b) Biocides selected from the group consisting of azoles, strobilurines, diphenyl ethers, anilides, organophosphates, synthetic pyrethroids, neonicotinoids, oxadiazines, benzoylureas, phenyl carbamates, chloroacetamides, triketones, pyridinecarboxylic acids, cyclohexanedione oximes, phenylpyrazoles, glyphosate and its salts, oxyflurofen, propanil, chlorpyrifos, bifenthrin, deltamethrin, azoxystrobin, krexoxim-methyl, lambda-cyhalothrin, novaluron, lufenuron, imidacloprid, thiacloprid, indoxacarb,oxyfluorfen, fluroxypyr and its esters, phenmedipham, desmedipham, acetochlor, tebuconazole, epoxiconazole, propiconazole, fenbuconazole, triademenol, fipronil and their mixtures; and optionally
(c) Oil components and/or co-solvents and/or
(d) Emulsifiers.

Surprisingly it has been observed that isoamyl lactate, obtained for example by esterification of lactic acid with isoamyl alcohol, preferably isopentyl alcohol obtained from fusel oil represents an efficient solvent or co-solvent for various types of biocides. In particular, isoamyl lactate is able to dissolve or disperse a wide range of biocides up 20 % better than other lactate solvents known from the state of the art, for instance 2-ethylhexyl lactate. Furthermore Isoamyl lactate is not water soluble which offers a clear benefit versus ethyl lactate or isopropyl lactate regarding the stability of the emulsion and crystallisation problems upon dilution.

Adding oil components as co-solvents, especially those having an ester structure to the compositions lead to emulsifiable concentrates formulations showing increased emulsion behaviour and stability, in particular with respect to opacity and layering.

### Isoamyl lactate

Isoamyl lactate (component a) according to the present invention follows formula (I),

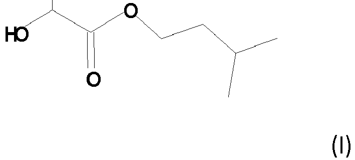

The most preferred species exhibiting the best performance in dissolving a wide number of different biocides over a long period and both at low and high temperatures is a lactic acid ester based on isoamyl alcohol from fusel oil.

A major advantage of the present invention is associated with the fact that both parts of the molecule are obtained from natural resources: Lactic acid (2-hydroxypropanoic acid) is obtained industrially via fermentation of carbohydrates (sugars or corn glucose). Natural Isoamyl alcohol (isopentyl alcohol) is contained in fusel oil which is a by-product of ethanol fermentation from starch or wheat for example. Fusel oil composition varies depending on the carbon source used for the fermentation but always contains isoamyl alcohol mixed with other short chain alcohols and water. Both lactic acid and isoamyl alcohol are therefore considered as "green" starting materials.

### Biocides

A biocide (component b) in the context of the present invention as defined in the claims is a plant protection agentwhich includes fungicides, herbicides, insecticides as defined in the claims.

Biocides can also be added to other materials (typically liquids) to protect the material from biological infestation and growth. For example, certain types of quaternary ammonium compounds (quats) can be added to pool water or industrial water systems to act as an algicide, protecting the water from infestation and growth of algae.

### a) Fungicides

A fungicide is one of three main methods of pest control - the chemical control of fungi in this case. Fungicides are chemical compounds used to prevent the spread of fungi in gardens and crops. Fungicides are also used to fight fungal infections. Fungicides can either be contact or systemic. A contact fungicide kills fungi when sprayed on its surface. A systemic fungicide has to be absorbed by the fungus before the fungus dies. Examples for suitable fungicidesencompass the following chemical classes and corresponding examples:
∘ Aminopyrimidines such as bupirimate,
∘ Anilinopyrimidines such as cyprodinil, mepanipyrim, pyrimethanil,
∘ Heteroaromatics such as hymexazol,
∘ Heteroaromatic hydrocarbons such as etridiazole,
∘ Chlorophenyls/Nitroanilines such as chloroneb, dicloran, quintozene, tecnazene, tolclofos-methyl,
∘ Benzamide fungicides such as zoxamide,
∘ Benzenesulfonamides such as flusulfamide,
∘ Benzimidazoles such as acibenzolar, benomyl, benzothiazole, carbendazim, fuberidazole, metrafenone, probenazole, thiabendazole, triazoxide, and benzimidazole precursor fungicides,
∘ Carbamates such as propamocarb, diethofencarb,
∘ Carboxamides such as boscalid, diclocymet, ethaboxam, flutolanil, penthiopyrad, thifluzamide
∘ Chloronitriles such chlorothalonil,
∘ Cinnamic acid amides such as dimethomorph, flumorph,
∘ Cyanoacetamide oximes such as cymoxanil,
∘ Cyclopropancarboxamides such as carpropamid,
∘ Dicarboximides such as iprodione, octhilinone, procymidone, vinclozolin
∘ Dimethyldithiocarbamates such ferbam, metam, thiram, ziram,
∘ Dinitroanilines such as fluazinam,
∘ Dithiocarbamates such as mancopper, mancozeb, maneb, metiram, nabam, propineb, zineb,
∘ Dithiolanes such as isoprothiolane,
∘ Glucopyranosyl antibiotics such as streptomycin, validamycin,
∘ Guanidines such as dodine, guazatine, iminoctadine,
∘ Hexopyranosyl antibiotics such as kasugamycin,
∘ Hydroxyanilides such as fenhexamid,
∘ Imidazoles such as imazalil, oxpoconazole, pefurazoate, prochloraz, triflumizole,
∘ Imidazolinones such as fenamidone,
∘ Inorganics such as Bordeaux mixture, copper hydroxide, copper naphthenate, copper oleate, copper oxychloride, copper(II) sulfate, copper sulfate, copper(II) acetate, copper(II) carbonate, cuprous oxide, sulfur,
∘ Isobenzofuranones such as phthalide,
∘ Mandelamides such as mandipropamide,
∘ Morpholines such as dodemorph, fenpropimorph, tridemorph, fenpropidin, piperalin, spiroxamine, aldimorph
∘ Organotins such as fentin,
∘ Oxazolidinones such as oxadixyl,
∘ Phenylamides such as benalaxyl, benalaxyl-M, furalaxyl, metalaxyl, metalaxyl-M, ofurace,
∘ Phenylpyrazoles such as fipronil,
∘ Phenylpyrroles such as fludioxonil,
∘ Phenylureas such as pencycuron,
∘ Phosphonates such fosetyl,
∘ Phthalamic acids such as tecloftalam,
∘ Phthalimides such as captafol, captan, folpet,
∘ Piperazines such as triforine,
∘ Propionamides such as fenoxanil,
∘ Pyridines such as pyrifenox,
∘ Pyrimidines such as fenarimol, nuarimol,
∘ Pyrroloquinolinones such as pyroquilon,
∘ Qils such as cyazofamid,
∘ Quinazolinones such as proquinazid,
∘ Quinolines such as quinoxyfen,
∘ Quinones such as dithianon,
∘ Sulfamides such as tolylfluanid, dichlofluanid,
∘ Strobilurines such as azoxystrobin, dimoxystrobin, famoxadone, fluoxastrobin, , kresoxim-methyl, metominostrobin, picoxystrobin, pyraclostrobin, trifloxystrobin, orysastrobin,
∘ Thiocarbamates such as methasulfocarb,
∘ Thiophanates such as thiophanate-methyl,
∘ Thiophencarboxamides such silthiofam,
∘ Triazole fungicides such as azaconazole, bitertanol, bromuconazole, cyproconazole, difenoconazole, diniconazole, epoxiconazole, fenbuconazole, fluquinconazole, flusilazole, flutriafol, fluotrimazole, hexaconazole, imibenconazole, ipconazole, metconazole, myclobutanil, penconazole, propiconazole, prothioconazole, simeconazole, tebuconazole, tetraconazole, triadimefon, triadimenol, triticonazole, quinconazole
∘ Triazolobenzothidazoles such as tricyclazole,
∘ Valinamide carbamates such as iprovalicarb, benthiavalicarb
∘ Fluopicolide
∘ Pentachlorophenol
and their mixtures.

### b) Herbicides

An herbicide is a pesticide used to kill unwanted plants. Selective herbicides kill specific targets while leaving the desired crop relatively unharmed. Some of these act by interfering with the growth of the weed and are often based on plant hormones. Herbicides used to clear waste ground are nonselective and kill all plant material with which they come into contact. Herbicides are widely used in agriculture and in landscape turf management. They are applied in total vegetation control (TVC) programs for maintenance of highways and railroads. Smaller quantities are used in forestry, pasture systems, and management of areas set aside as wildlife habitat. In general, active ingredients representing including various chemical classes and corresponding examples can be used
∘ Anilides such as propanil
∘ Aryloxycarboxylic acids e.g. MCPA-thioethyl
∘ Aryloxyphenoxypropionates e.g. clodinafop-propargyl, cyhalofop-butyl, diclofops, fluazifops, haloxyfops, quizalofops,
∘ Chloroacetamides e.g. acetolochlor, alachlor, butachlor, dimethenamid, metolachlor, propachlor
∘ Cyclohexanedione oximes e.g. clethodim, sethoxydim, tralkoxydim,
∘ Benzamides such as isoxaben
∘ Benzimidazoles such as dicamba, ethofumesate
∘ Dinitroanilines e.g. trifluralin, pendimethalin,
∘ Diphenyl ethers e.g. aclonifen, oxyfluorfen,
∘ The glycine derivative glyphosate, a systemic nonselective (it kills any type of plant) herbicide used in no-till burndown and for weed control in crops that are genetically modified to resist its effects,
∘ Hydroxybenzonitriles e.g. bromoxynil,
∘ Imidazolinones e.g. fenamidone, imazapic, imazamox, imazapic, imazapyr, imazaquin,
∘ Isoxazolidinones e.g. clomazone
∘ Paraquat as bypyridylium,
∘ Phenyl carbamates e.g. desmedipham, phenmedipham,
∘ Phenylpyrazoles e.g. pyraflufen-ethyl
∘ Phenylpyrazolines e.g. pinoxaden,
∘ Pyridinecarboxylic acids or synthetic auxins e.g. picloram, clopyralid, and triclopyr,
∘ Pyrimidinyloxybenzoics e.g. bispyrtbac-sodium
∘ Sulfonyureas e.g. amidosulfuron, azimsulfuron, bensulfuron-methyl, chlorsulfuron, flazasulfuron, foramsulfuron, flupyrsulfuron-methyl-sodium, nicosulfuron, rimsulfuron, sulfosulfuron, tribenuron-methyl, trifloxysurlfuron-sodium, triflusulfuron, tritosulfuron,
∘ Triazolopyrimidines e.g. penoxsulam, metosulam, florasulam,
∘ Triketones e.g. mesotriones, sulcotrione,
∘ Ureas e.g. diuron, linuron,
∘ Phenoxycarboxylic acids such as 2,4-D, MCPA, MCPB, mecoprops,
∘ Triazines such as atrazine, simazine, terbuthylazine,
and their mixtures.

### c) Insecticides

An insecticide is a pesticide used against insects in all developmental forms. They include ovicides and larvicides used against the eggs and larvae of insects. Insecticides are used in agriculture, medicine, industry and the household. In the following, suitable chemical classes and examples of insecticides are mentioned:
∘ Abamectin, emamectin,
∘ Anthranilic diamides such as rynaxypyr
∘ Synthetic auxins Duch as avermectin,
∘ Amidines such as amitraz,
∘ Anthranilic diamide Duch as rynaxypyr,
∘ Carbamates such as aldicarb, carbofuran, carbaryl, methomyl, 2-(1-methylpropyl)phenyl methylcarbamate,
∘ Chlorinated insecticides such as, for example, Camphechlor, DDT, Hexachlorocyclohexane, gamma-Hexachlorocyclohexane, Methoxychlor, Pentachlorophenol, TDE, Aldrin, Chlordane, Chlordecone, Dieldrin, Endosulfan, Endrin, Heptachlor, Mirex,
∘ Juvenile hormone mimics such as pyriproxyfen,
∘ Neonicotinoids such as imidacloprid, clothianidin, thiacloprid, thiamethoxam,
∘ Organophosphorus compounds such as acephate, azinphos-methyl, bensulide, chlorethoxyfos, chlorpyrifos, chlorpyriphos-methyl, diazinon, dichlorvos (DDVP), dicrotophos, dimethoate, disulfoton, dthoprop, fenamiphos, fenitrothion, fenthion, fosthiazate, malathion, methamidophos, methidathion, methyl-parathion, mevinphos, naled, omethoate, oxydemeton-methyl, parathion, phorate, phosalone, phosmet, phostebupirim, pirimiphos-methyl, profenofos, terbufos, tetrachlor-vinphos, tribufos, trichlorfon,
∘ Oxadiazines such as indoxacarb,
∘ Plant toxin derived compounds such as derris (rotenone), pyrethrum, neem (azadirachtin), nicotine, caffeine,
∘ Pheromones such cuellure, methyl eugenol,
∘ Pyrethroids such as, for example, allethrin, bifenthrin, deltamethrin, permethrin, resmethrin, sumithrin, tetramethrin, tralomethrin, transfluthrin,
∘ Selective feeding blockers such as flonicamid, pymetrozine,
∘ Spinosyns e.g. spinosad
and their mixtures.

Overall preferred are biocides selected either
(i) from the group consisting of azoles, strobilurines, diphenyl ethers, anilides, organophosphates, synthetic pyrethroids, neonicotinoids, oxadiazines, benzoylureas, phenyl carbamates, chloroacetamides, triketones, pyridinecarboxylic acids, cyclohexanedione oximes, phenylpyrazoles, glyphosate and its salts, and their mixtures, or
(ii) from the group consisting of oxyflurofen, propanil, chlorpyrifos, bifenthrin, deltamethrin, azoxystrobin, krexoxim-methyl, lambda-cyhalothrin, novaluron, lufenuron, imidacloprid, thiacloprid, indoxacarb,oxyfluorfen, fluroxypyr and its esters, phenmedipham, desmedipham, acetochlor, tebuconazole, epoxiconazole, propiconazole, fenbuconazole, triademenol, fipronil, and their mixtures.

### Oil components or co-solvents

Suitable oil components or co-solvents (component c) are, for example, Guerbet alcohols based on fatty alcohols having 6 to 18, preferably 8 to 10, carbon atoms, esters of linear C6-C22-fatty acids with linear or branched C6-C22-fatty alcohols or esters of branched C6-C 13-carboxylic acids with linear or branched C6-C 22-fatty alcohols, such as, for example, myristyl myristate, myristyl palmitate, myristyl stearate, myristyl isostearate, myristyl oleate, myristyl behenate, myristyl erucate, cetyl myristate, cetyl palmitate, cetyl stearate, cetyl isostearate, cetyl oleate, cetyl behenate, cetyl erucate, stearyl myristate, stearyl palmitate, stearyl stearate, stearyl isostearate, stearyl oleate, stearyl behenate, stearyl erucate, isostearyl myristate, isostearyl palmitate, isostearyl stearate, isostearyl isostearate, isostearyl oleate, isostearyl behenate, isostearyl oleate, oleyl myristate, oleyl palmitate, oleyl stearate, oleyl isostearate, oleyl oleate, oleyl behenate, oleyl erucate, behenyl myristate, behenyl palmitate, behenyl stearate, behenyl isostearate, behenyl oleate, behenyl behenate, behenyl erucate, erucyl myristate, erucyl palmitate, erucyl stearate, erucyl isostearate, erucyl oleate, erucyl behenate and erucyl erucate. Also suitable are esters of linear C6-C22-fatty acids with branched alcohols, in particular 2-ethylhexanol, esters of C18-C38- alkylhydroxy carboxylic acids with linear or branched C6-C 22-fatty alcohols, in particular Dioctyl Malate, esters of linear and/or branched fatty acids with polyhydric alcohols (such as, for example, propylene glycol, dimerdiol or trimertriol) and/or Guerbet alcohols, triglycerides based on C6 -C10-fatty acids, liquid mono-/di/triglyceride mixtures based on C6-C18-fatty acids, esters of C6- C22-fatty alcohols and/or Guerbet alcohols with aromatic carboxylic acids, in particular benzoic acid, esters of C2- C12-dicarboxylic acids with linear or branched alcohols having 1 to 22 carbon atoms (Cetiol^{®} B)or polyols having 2 to 10 carbon atoms and 2 to 6 hydroxyl groups, vegetable oils, branched primary alcohols, substituted cyclohexanes, linear and branched C6-C22-fatty alcohol carbonates, such as, for example, Dicaprylyl Carbonate (Cetiol^{®} CC), Guerbet carbonates, based on fatty alcohols having 6 to 18, preferably 8 to 10, carbon atoms, esters of benzoic acid with linear and/or branched C6-C22-alcohols (e.g. Cetiol^{®} AB), linear or branched, symmetrical or asymmetrical dialkyl ethers having 6 to 22 carbon atoms per alkyl group, such as, for example, dicaprylyl ether (Cetiol^{®} OE), ring-opening products of epoxidized fatty acid esters with polyols, silicone oils (cyclomethicones, silicone methicone grades, etc.), aliphatic or naphthenic hydrocarbons, such as, for example, The preferred oil components or co-solvents show an ester or an amide structure. Particularly preferred are adipates (Cetiol^{®} B, Agnique^{®} DiME 6), methyl esters of vegetable oils (Agnique ME 18RD-F, Agnique^{®} ME 12C-F), alkyl esters (Agnique^{®} AE 3-2EH =2-Ethylhexyl Lactate) and alkyl amides (Agnique^{®} AMD 10) - all products available in the market from Cognis GmbH, Dusseldorf.

### Emulsifiers

Suitable emulsifiers (component d) include non-ionic and anionic surfactants and their mixtures. Non-ionic surfactants include for example:
∘ products of the addition of 2 to 30 mol ethylene oxide and/or 0 to 5 mol propylene oxide onto linear C₈₋₂₂ fatty alcohols, onto C₁₂₋₂₂ fatty acids and onto alkyl phenols containing 8 to 15 carbon atoms in the alkyl group;
∘ C_{12/18} fatty acid monoesters and diesters of addition products of 1 to 30 mol ethylene oxide onto glycerol;
∘ glycerol mono- and diesters and sorbitan mono- and diesters of saturated and unsaturated fatty acids containing 6 to 22 carbon atoms and ethylene oxide addition products thereof;
∘ addition products of 15 to 60 mol ethylene oxide onto castor oil and/or hydrogenated castor oil;
∘ polyol esters and, in particular, polyglycerol esters such as, for example, polyglycerol polyricinoleate, polyglycerol poly-12-hydroxystearate or polyglycerol dimerate isostearate. Mixtures of compounds from several of these classes are also suitable;
∘ addition products of 2 to 15 mol ethylene oxide onto castor oil and/or hydrogenated castor oil;
∘ partial esters based on linear, branched, unsaturated or saturated C_{6/22} fatty acids, ricinoleic acid and 12-hydroxystearic acid and glycerol, polyglycerol, pentaerythritol, - dipentaerythritol, sugar alcohols (for example sorbitol), alkyl glucosides (for example methyl glucoside, butyl glucoside, lauryl glucoside) and polyglucosides (for example cellulose);
∘ mono-, di and trialkyl phosphates and mono-, di- and/or tri-PEG-alkyl phosphates and salts thereof;
∘ wool wax alcohols;
∘ polysiloxane/polyalkyl polyether copolymers and corresponding derivatives;
∘ mixed esters of pentaerythritol, fatty acids, citric acid and fatty alcohol and/or mixed esters of C₆₋₂₂ fatty acids, methyl glucose and polyols, preferably glycerol or polyglycerol,
∘ polyalkylene glycols and

The addition products of ethylene oxide and/or propylene oxide onto fatty alcohols, fatty acids, alkylphenols, glycerol mono- and diesters and sorbitan mono- and diesters of fatty acids or onto castor oil are known commercially available products. They are homologue mixtures of which the average degree of alkoxylation corresponds to the ratio between the quantities of ethylene oxide and/or propylene oxide and substrate with which the addition reaction is carried out. C_{12/18} fatty acid monoesters and diesters of addition products of ethylene oxide onto glycerol are known as lipid layer enhancers for cosmetic formulations. The preferred emulsifiers are described in more detail as follows:

### a) Partial glycerides

Typical examples of suitable partial glycerides are hydroxystearic acid monoglyceride, hydroxystearic acid diglyceride, isostearic acid monoglyceride, isostearic acid diglyceride, oleic acid monoglyceride, oleic acid diglyceride, ricinoleic acid monoglyceride, ricinoleic acid diglyceride, linoleic acid monoglyceride, linoleic acid diglyceride, linolenic acid monoglyceride, linolenic acid diglyceride, erucic acid monoglyceride, erucic acid diglyceride, tartaric acid monoglyceride, tartaric acid diglyceride, citric acid monoglyceride, citric acid diglyceride, malic acid monoglyceride, malic acid diglyceride and technical mixtures thereof which may still contain small quantities of triglyceride from the production process. Addition products of 1 to 30, and preferably 5 to 10, mol ethylene oxide onto the partial glycerides mentioned are also suitable.

### b) Sorbitan esters

Suitable sorbitan esters are sorbitan monoisostearate, sorbitan sesquiisostearate, sorbitan diisostearate, sorbitan triisostearate, sorbitan monooleate, sorbitan sesquioleate, sorbitan dioleate, sorbitan trioleate, sorbitan monoerucate, sorbitan sesquierucate, sorbitan dierucate, sorbitan trierucate, sorbitan monoricinoleate, sorbitan sesquiricinoleate, sorbitan diricinoleate, sorbitan triricinoleate, sorbitan monohydroxystearate, sorbitan sesquihydroxystearate, sorbitan dihydroxystearate, sorbitan trihydroxystearate, sorbitan monotartrate, sorbitan sesquitartrate, sorbitan ditartrate, sorbitan tritartrate, sorbitan monocitrate, sorbitan sesquicitrate, sorbitan dicitrate, sorbitan tricitrate, sorbitan monomaleate, sorbitan sesquimaleate, sorbitan dimaleate, sorbitan trimaleate and technical mixtures thereof. Addition products of 1 to 30, and preferably 5 to 10, mol ethylene oxide onto the sorbitan esters mentioned are also suitable.

### c) Alk(en)yl oligoglycosides

The alkyl or alkenyl oligoglycosides representing also preferred emulsifiers may be derived from aldoses or ketoses containing 5 or 6 carbon atoms, preferably glucose. Accordingly, the preferred alkyl and/or alkenyl oligoglycosides are alkyl or alkenyl oligoglucosides. These materials are also known generically as "alkyl polyglycosides" (APG). The alk(en)yl oligoglycosides according to the invention correspond to formula (III) :

R⁴O[G]ₚ (III)

wherein R⁴ is an alkyl or alkenyl radical having from 6 to 22 carbon atoms, G is a sugar unit having 5 or 6 carbon atoms and p is a number from 1 to 10. The index p in general formula (II) indicates the degree of oligomerisation (DP degree), i.e. the distribution of mono- and oligoglycosides, and is a number of 1 to 10. Whereas p in a given compound must always be an integer and, above all, may assume a value of 1 to 6, the value p for a certain alkyl oligoglycoside is an analytically determined calculated quantity which is mostly a broken number. Alk(en)yl oligoglycosides having an average degree of oligomerisation p of 1.1 to 3.0 are preferably used. Alk(en)yl oligoglycosides having a degree of oligomerisation below 1.7 and, more particularly, between 1.2 and 1.4 are preferred from the applicational point of view. The alkyl or alkenyl radical R⁵ may be derived from primary alcohols containing 4 to 22 and preferably 8 to 16 carbon atoms. Typical examples are butanol, caproic alcohol, caprylic alcohol, capric alcohol, undecyl alcohol, lauryl alcohol, myristyl alcohol, cetyl alcohol, palmitoleyl alcohol, stearyl alcohol, isostearyl alcohol, oleyl alcohol, elaidyl alcohol, petroselinyl alcohol, arachyl alcohol, gadoleyl alcohol, behenyl alcohol, erucyl alcohol and technical mixtures thereof such as are formed, for example, in the hydrogenation of technical fatty acid methyl esters or in the hydrogenation of aldehydes from Roelen's oxo synthesis. Alkyl oligoglucosides based on hydrogenated C₈-C₁₆ coconut oil alcohol having a DP of 1 to 3 are preferred. Also suitable are alkoxylation products of alkyl oligoglucosides, for example adducts of 1 to 10 moles ethylene oxide and/or 1 to 5 moles propylene oxide to C₈-C₁₀ or C₁₂-C₁₈ alkyl oligoglucoside having a DP between 1.2 and 1.4.

### d) Alkoxylated vegetable oils

Suitable emulsifiers are castor oil, rape seed oil, soy been oil ethoxylated with 3 to 80 moles ethylene oxide (Agnique^{®} CSO 35, Agnique^{®} SBO 10, Agnique^{®} SBO 60))

### e) Alkoxylated copolymers

Typical copolymers are ethoxylated and propoxylated block and/or random polymers of C₂-C₂₂ linear or branched alcohols.

### f) Anionic emulsifiers

Typical anionic emulsifiers encompass alkylbenzene sulfonic acids and their salts, as for example calcium dodecylbenzene sulfonate dissolved in isobutanol (Agnique^{®} ABS 65C) or 2-ethylhexanol (Agnique^{®} ABS 60C-EH), dialkyl sulfosuccinates, as for example di-2-ethylhexyl sulfosuccinate or dioctyl sulfosuccinate, and polyacrylates having a molar weight of from 1,000 to 50,000.

### g) Miscellaneous emulsifiers

Other suitable emulsifiers are zwitterionic surfactants. Zwitterionic surfactants are surface-active compounds which contain at least one quaternary ammonium group and at least one carboxylate and one sulfonate group in the molecule. Particularly suitable zwitterionic surfactants are the so-called betaines such as the N-alkyl-N,N-dimethyl ammonium glycinates, for example cocoalkyl dimethyl ammonium glycinate, N-acylaminopropyl-N,N-dimethyl ammonium glycinates, for example cocoacylaminopropyl dimethyl ammonium glycinate, and 2-alkyl-3-carboxymethyl-3-hydroxyethyl imidazolines containing 8 to 18 carbon atoms in the alkyl or acyl group and cocoacylaminoethyl hydroxyethyl carboxymethyl glycinate. The fatty acid amide derivative known under the CTFA name of *Cocamidopropyl Betaine* is particularly preferred. Ampholytic surfactants are also suitable emulsifiers. Ampholytic surfactants are surface-active compounds which, in addition to a C_{8/18} alkyl or acyl group, contain at least one free amino group and at least one -COOH- or -SO₃H- group in the molecule and which are capable of forming inner salts. Examples of suitable ampholytic surfactants are N-alkyl glycines, N-alkyl propionic acids, N-alkylaminobutyric acids, N-alkyliminodipropionic acids, N-hydroxyethyl-N-alkylamidopropyl glycines, N-alkyl taurines, N-alkyl sarcosines, 2-alkylaminopropionic acids and alkylaminoacetic acids containing around 8 to 18 carbon atoms in the alkyl group. Particularly preferred ampholytic surfactants are N-cocoalkylaminopropionate, cocoacylaminoethyl aminopropionate and C_{12/18} acyl sarcosine.

### Biocide compositions

Depending on the nature of the biocide the products may show the following compositions:
(a) about 0.1 % b.w. to about 99 % b.w., preferably about 15 % b.w. to about 70 % b.w., and most preferably about 20 % b.w. to about 45 % b.w. isoamyl lactate ;
(b) about 1 % b.w. to about 99.1 % b.w., preferably about 5 % b.w. to about 75 % b.w., and most preferably about 15 % b.w. to about 40 % b.w. biocides selected from the group consisting of azoles, strobilurines, diphenyl ethers, anilides, organophosphates, synthetic pyrethroids, neonicotinoids, oxadiazines, benzoylureas, phenyl carbamates, chloroacetamides, triketones, pyridinecarboxylic acids, cyclohexanedione oximes, phenylpyrazoles, glyphosate and its salts, oxyflurofen, propanil, chlorpyrifos, bifenthrin, deltamethrin, azoxystrobin, krexoxim-methyl, lambda-cyhalothrin, novaluron, lufenuron, imidacloprid, thiacloprid, indoxacarb,oxyfluorfen, fluroxypyr and its esters, phenmedipham, desmedipham, acetochlor, tebuconazole, epoxiconazole, propiconazole, fenbuconazole, triademenol, fipronil and their mixtures;
(c) 0 to about 50 % b.w., preferably about 5 % b.w. to about 30 % b.w. and more preferably about 10 % b.w. to about 25 % b.w. oil components or co-solvents and
(d) 0 to about 15 % b.w., and preferably about 5 % b.w. to about 10 % b.w., emulsifiers on the condition that the numbers optionally together with water add to 100 % b.w. The compositions represent concentrates to be diluted with water to give aqueous formulations for end-users comprising about 0.5 to about 5, preferably about 0.5 to about 1 % of the active matter represented by the concentrate.

### Industrial application

A final embodiment of the present invention is related to the use of isoamyl lactate as green solvents or dispersants for biocides selected from the group consisting of azoles, strobilurines, diphenyl ethers, anilides, organophosphates, synthetic pyrethroids, neonicotinoids, oxadiazines, benzoylureas, phenyl carbamates, chloroacetamides, triketones, pyridinecarboxylic acids, cyclohexanedione oximes, phenylpyrazoles, glyphosate and its salts, oxyflurofen, propanil, chlorpyrifos, bifenthrin, deltamethrin, azoxystrobin, krexoxim-methyl, lambda-cyhalothrin, novaluron, lufenuron, imidacloprid, thiacloprid, indoxacarb,oxyfluorfen, fluroxypyr and its esters, phenmedipham, desmedipham, acetochlor, tebuconazole, epoxiconazole, propiconazole, fenbuconazole, triademenol, fipronil and their mixtures;.

### Manufacturing Example M1

A 4 I four-neck flask equipped with mechanical stirrer, heating, distillation apparatus with water separator, and nitrogen/vacuum inlet was charged under nitrogen atmosphere with 811 g (7.2 mol) lactic acid (80% in water) and 1454 g (16.5 mol) isoamyl alcohol. The mixture was heated to 150 °C. At about 105 °C the first distillate could be collected. It was split into a waste water phase and an alcohol phase which was fed back into the reaction vessel. When the acid value of the reaction mixture had fallen below 1 mg KOH/g the reaction was finished and the obtained raw product purified by fractionation at reduced pressure. Analysis data: Acid value: 0.08 mg KOH/g; content of isoamyl alcohol: < 1%.

### Examples 1 to 4, Comparative Example C1

Several Emulsifiable Concentrates ("EC") have been designed and prepared by mixing biocides, lactates, co-solvents and emulsifiers. The concentrates were subsequently diluted at 5% in water. Characteristics of 5 % b.w. emulsions in CIPAC water B and stored at 20 °C for 24 h were assessed and presented in Table 1. The stability of the emulsions was determined as a function of time. As far as layering is concerned (++) means "no layering" and (+) "about 1 ml layering". Opacity (++) means an opaque white emulsion and (+) a slightly opalescent emulsion. The invention is illustrated by Examples 1 to 4; Example C1 serves for comparison.

**Table 1**

| Stability of biocide compositions | | | | | |
|---|---|---|---|---|---|
| **Composition [% b.w.]** | **1** | **2** | **C1** | **3** | **4** |
| Tebuconazole | 25 | 25 | 20 | - | - |
| Oxyfluorfen | - | - | - | 15 | 23 |
| Isoamyl lactate | 63 | 65 | - | 75 | 40 |

| **Composition [% b.w.]** | **1** | **2** | **C1** | **3** | **4** |
|---|---|---|---|---|---|
| Agnique^{®} AMD 10¹ | - | - | - | - | 27 |
| 2-Ethylhexyl Lactate | - | - | 65 | - | - |
| Agnique^{®} MBL 530² | 10 | 10 | 15 | 10 | 10 |
| Agnique^{®} ABS 65 C³ | 2 | - | - | - | - |
| ***Appearance*** | Clear | Clear | Clear | Clear | Clear |

| ***Emulsion properties*** | | | | | |
|---|---|---|---|---|---|
| - spontaneously | ++ | ++ | ++ | + | ++ |
| - layering after 1 h | ++ | ++ | ++ | ++ | ++ |
| - opacity after 1 h | ++ | ++ | + | + | + |
| - layering after 2 h | + | ++ | + | ++ | ++ |
| - opacity after 2 h | ++ | ++ | + | + | + |
| - layering after 24 h | + | + | + | + | + |

| | | | | | |
|---|---|---|---|---|---|
| ¹ C₁₀ fatty acid dimethylamide ² Emulsifiers blend based on anionic and non ionic surfactants ³ Ca DodecylBenzenesulfonate (linear) 65% in isobutanol | | | | | |

The examples indicate that excellent emulsification behaviour is obtained as a result of optimized solvents mixture and emulsifier systems. Also the Tebuconazole concentration can be increased in the EC formulation by using isoamyl lactate instead of 2-ethylhexyllactate.

### Example 5 and Comparative Examples C2 to C5

Solubility of several pesticides was measured in Isoamyl lactate versus other lactates. In addition the solubility in water of each lactate has been checked. Non water soluble solvents are preferred to facilitate EC formulations and avoid crystallisation upon dilution in the spray-tank.

The results are presented in Table 2. The invention is illustrated by Example 6, Examples C2 to C5 serve for comparison. According to these results isoamyl lactate is the best compromise between solvency performance and limited solubility in water.

**Table 2**

| Solubility of biocides [% b.w.] | | | | | |
|---|---|---|---|---|---|
| **Ex.** | **Solvents** | **Tebuconazole** | **Epoxiconazole** | **Oxyfluorfen** | **Water** |
| C2 | 2-Ethylhexyl lactate | 25 | 8 | 11 | < 0.5% |
| 6 | Isoamyl lactate | 32 | 12 | 19 | <1% |
| C3 | Butyl lactate | 32 | 15 | 19 | yes |
| C4 | Isopropyl lactate | 33 | 17 | 21 | yes |
| C5 | Ethyl lactate | 38 | 19 | 22 | yes |

## Claims

1. Agrochemical compositions, comprising
(a) Isoamyl lactate;
(b) Biocides selected from the group consisting of azoles, strobilurines, diphenyl ethers, anilides, organophosphates, synthetic pyrethroids, neonicotinoids, oxadiazines, benzoylureas, phenyl carbamates, chloroacetamides, triketones, pyridinecarboxylic acids, cyclohexanedione oximes, phenylpyrazoles, glyphosate and its salts, oxyflurofen, propanil, chlorpyrifos, bifenthrin, deltamethrin, azoxystrobin, krexoxim-methyl, lambda-cyhalothrin, novaluron, lufenuron, imidacloprid, thiacloprid, indoxacarb,oxyfluorfen, fluroxypyr and its esters, phenmedipham, desmedipham, acetochlor, tebuconazole, epoxiconazole, propiconazole, fenbuconazole, triademenol, fipronil and their mixtures;
and optionally
(c) Oil components or co- solvents and/or
(d) Emulsifiers.

2. Compositions according to Claim 1, **characterised in that** they comprise as component (a) isoamyl lactate obtained from fusel oil.

3. Compositions according to any of the preceding Claims 1 or 2, **characterised in that** they comprise oil components or co-solvents (component c) selected from the group consisting of Guerbet alcohols based on fatty alcohols having 6 to 18 carbon atoms, esters of linear C₆-C₂₂-fatty acids with linear or branched C₆-C₂₂-fatty alcohols or esters of branched C₆-C₁₃-carboxylic acids with linear or branched C₆-C₂₂-fatty alcohols, methyl esters of C₆-C₂₂ fatty acids, esters of linear C₆-C₂₂-fatty acids with branched alcohols, esters of C₁₈-C₃₈- alkyl hydroxy carboxylic acids with linear or branched C₆-C₂₂-fatty alcohols, esters of linear and/or branched fatty acids with polyhydric alcohols and/or Guerbet alcohols, triglycerides based on C₆-C₁₀-fatty acids, liquid mono-/di-/triglyceride mixtures based on C₆-C₁₈-fatty acids, esters of C₆-C₂₂-fatty alcohols and/or Guerbet alcohols with aromatic carboxylic acids, esters of C₂-C₁₂-dicarboxylic acids with linear or branched alcohols having 1 to 22 carbon atoms or polyols having 2 to 10 carbon atoms and 2 to 6 hydroxyl groups, vegetable oils, branched primary alcohols, substituted cyclohexanes, linear and branched C₆-C₂₂-fatty alcohol carbonates, Guerbet carbonates, based on fatty alcohols having 6 to 18, preferably 8 to 10, carbon atoms, esters of monopropylene glycol with C₂-C₁₈ acids and benzoic acid, esters of benzoic acid with linear and/or branched C₆-C₂₂-alcohols, linear or branched, symmetrical or asymmetrical dialkyl ethers having 6 to 22 carbon atoms per alkyl group, ring-opening products of epoxidized fatty acid esters with polyols, silicone oils and/or aliphatic or naphthenic hydrocarbons, mineral oils and their mixtures.

4. Compositions according to any of the preceding Claims 1 to 3, **characterised in that** said oil components show an ester or amide structure.

5. Compositions according to any of the preceding Claims 1 to 4, **characterised in that** said oil components are selected from the group consisting of adipates, methyl esters of vegetable oils, alkyl esters, fatty acid alkylamides.

6. Compositions according to any of the preceding Claims 1 to 5, **characterised in that** they comprise emulsifiers (component d) selected from the group consisting of non-ionic and anionic surfactants or their mixtures.

7. Compositions according to any of the preceding Claims 1 to 6, **characterised in that** they comprise:
(a) 0.1 to 99 % b.w. isoamyl lactate;
(b) 1 to 99.1 % b.w. biocides selected from the group consisting of azoles, strobilurines, diphenyl ethers, anilides, organophosphates, synthetic pyrethroids, neonicotinoids, oxadiazines, benzoylureas, phenyl carbamates, chloroacetamides, triketones, pyridinecarboxylic acids, cyclohexanedione oximes, phenylpyrazoles, glyphosate and its salts, oxyflurofen, propanil, chlorpyrifos, bifenthrin, deltamethrin, azoxystrobin, krexoxim-methyl, lambda-cyhalothrin, novaluron, lufenuron, imidacloprid, thiacloprid, indoxacarb,oxyfluorfen, fluroxypyr and its esters, phenmedipham, desmedipham, acetochlor, tebuconazole, epoxiconazole, propiconazole, fenbuconazole, triademenol, fipronil and their mixtures;
(c) 0 to 50 % b.w. oil components or co-solvents and
(d) 0 to 15 % b.w emulsifiers, on the condition that the numbers add optionally together with water to 100 % b.w.

8. Use of isoamyl lactate as solvent or dispersant for biocides selected from the group consisting of azoles, strobilurines, diphenyl ethers, anilides, organophosphates, synthetic pyrethroids, neonicotinoids, oxadiazines, benzoylureas, phenyl carbamates, chloroacetamides, triketones, pyridinecarboxylic acids, cyclohexanedione oximes, phenylpyrazoles, glyphosate and its salts, oxyflurofen, propanil, chlorpyrifos, bifenthrin, deltamethrin, azoxystrobin, krexoxim-methyl, lambda-cyhalothrin, novaluron, lufenuron, imidacloprid, thiacloprid, indoxacarb,oxyfluorfen, fluroxypyr and its esters, phenmedipham, desmedipham, acetochlor, tebuconazole, epoxiconazole, propiconazole, fenbuconazole, triademenol, fipronil and their mixtures.

## Patentansprüche

1. Agrochemische Zusammensetzungen, umfassend
(a) Isoamyllactat;
(b) Biozide, ausgewählt aus der Gruppe, bestehend aus Azolen, Strobilurinen, Diphenylethern, Aniliden, Organophosphaten, synthetischen Pyrethroiden, Neonicotinoiden, Oxadiazinen, Benzoylharnstoffen, Phenylcarbamaten, Chloracetamiden, Triketonen, Pyridincarbonsäuren, Cyclohexandionoximen, Phenylpyrazolen, Glyphosat und dessen Salzen, Oxyflurofen, Propanil, Chlorpyrifos, Bifenthrin, Deltamethrin, Azoxystrobin, Krexoxim-methyl, Lambda-Cyhalothrin, Novaluron, Lufenuron, Imidacloprid, Thiacloprid, Indoxacarb, Oxyfluorfen, Fluroxypyr und dessen Estern, Phenmedipham, Desmedipham, Acetochlor, Tebuconazol, Epoxiconazol, Propiconazol, Fenbuconazol, Triademenol, Fipronil und deren Gemischen;
und gegebenenfalls
(c) Ölkomponenten oder Co-Lösungsmittel und/oder
(d) Emulgatoren.

2. Zusammensetzungen nach Anspruch 1, **dadurch gekennzeichnet, dass** sie als Komponente (a) aus Fuselöl erhaltenes Isoamyllactat umfassen.

3. Zusammensetzungen nach einem der vorhergehenden Ansprüche 1 oder 2, **dadurch gekennzeichnet, dass** sie Ölkomponenten oder Co-Lösungsmittel (Komponente c) umfassen, ausgewählt aus der Gruppe, bestehend aus Guerbet-Alkoholen auf der Basis von Fettalkoholen mit 6 bis 18 Kohlenstoffatomen, Estern von geraden C₆-C₂₂-Fettsäuren mit geraden oder verzweigten C₆-C₂₂-Fettalkoholen oder Estern von verzweigten C₆-C₁₃-Carbonsäuren mit geraden oder verzweigten C₆-C₂₂-Fettalkoholen, Methylestern von C₆-C₂₂-Fettsäuren, Estern von geraden C₆-C₂₂-Fettsäuren mit verzweigten Alkoholen, Estern von C₁-C₃₈-Alkylhydroxycarbonsäuren mit geraden oder verzweigten C₆-C₂₂-Fettalkoholen, Estern von geraden und/oder verzweigten Fettsäuren mit mehrwertigen Alkoholen und/oder Guerbet-Alkoholen, Triglyceriden auf der Basis von C₆-C₁₀-Fettsäuren, flüssigen Mono-/Di-/Triglyceridgemischen auf der Basis von C₆-C₁₈-Fettsäuren, Estern von C₆-C₂₂-Fettalkoholen und/oder Guerbet-Alkoholen mit aromatischen Carbonsäuren, Estern von C₂-C₁₂-Dicarbonsäuren mit geraden oder verzweigten Alkoholen mit 1 bis 22 Kohlenstoffatomen oder Polyolen mit 2 bis 10 Kohlenstoffatomen und 2 bis 6 Hydroxylgruppen, pflanzlichen Ölen, verzweigten primären Alkoholen, substituierten Cyclohexanen, geraden und verzweigten C₆-C₂₂-Fettalkoholcarbonaten, Guerbet-Carbonaten, auf der Basis von Fettalkoholen mit 6 bis 18, vorzugsweise 8 bis 10 Kohlenstoffatomen, Estern von Monopropylenglykol mit C₂-C₁₈-Säuren und Benzoesäure, Estern von Benzoesäure mit geraden und/oder verzweigten C₆-C₂₂-Alkoholen, geraden oder verzweigten, symmetrischen oder unsymmetrischen Dialkylethern mit 6 bis 22 Kohlenstoffatomen pro Alkylgruppe, Ringöffnungsprodukten von epoxidierten Fettsäureestern mit Polyolen, Silikonölen und/oder aliphatischen oder naphthenischen Kohlenwasserstoffen, Mineralölen und deren Gemischen.

4. Zusammensetzungen nach einem der vorhergehenden Ansprüche 1 bis 3, **dadurch gekennzeichnet, dass** die Ölkomponenten eine Ester- oder Amidstruktur aufweisen.

5. Zusammensetzungen nach einem der vorhergehenden Ansprüche 1 bis 4, **dadurch gekennzeichnet, dass** die Ölkomponenten aus der Gruppe ausgewählt werden, die aus Adipaten, Methylestern von Pflanzenölen, Alkylestern, Fettsäurealkylamiden besteht.

6. Zusammensetzungen nach einem der vorhergehenden Ansprüche 1 bis 5, **dadurch gekennzeichnet, dass** sie Emulgatoren (Komponente d) enthalten, die aus der Gruppe ausgewählt werden, bestehend aus nichtionischen und anionischen oberflächenaktiven Mitteln oder deren Gemischen.

7. Zusammensetzungen nach einem der vorhergehenden Ansprüche 1 bis 6, **dadurch gekennzeichnet, dass** sie Folgendes umfassen:
(a) 0,1 bis 99 Gew.-% Isoamyllactat;
(b) 1 bis 99,1 Gew.-% Biozide, ausgewählt aus der Gruppe, bestehend aus Azolen, Strobilurinen, Diphenylethern, Aniliden, Organophosphaten, synthetischen Pyrethroiden, Neonicotinoiden, Oxadiazinen, Benzoylharnstoffen, Phenylcarbamaten, Chloracetamiden, Triketonen, Pyridincarbonsäuren, Cyclohexandionoximen, Phenylpyrazolen, Glyphosat und dessen Salzen, Oxyflurofen, Propanil, Chlorpyrifos, Bifenthrin, Deltamethrin, Azoxystrobin, Krexoxim-methyl, Lambda-Cyhalothrin, Novaluron, Lufenuron, Imidacloprid, Thiacloprid, Indoxacarb, Oxyfluorfen, Fluroxypyr und dessen Estern, Phenmedipham, Desmedipham, Acetochlor, Tebuconazol, Epoxiconazol, Propiconazol, Fenbuconazol, Triademenol, Fipronil, und deren Gemischen;
(c) 0 bis 50 Gew.-% Ölkomponenten oder Co-Lösungsmittel und
(d) 0 bis 15 Gew.-% Emulgatoren,
unter der Bedingung, dass die Zahlen, gegebenenfalls zusammen mit Wasser, addiert 100 Gew.-% ergeben.

8. Verwendung von Isoamyllactat als Lösungsmittel oder Dispergiermittel für Biozide, ausgewählt aus der Gruppe, bestehend aus Azolen, Strobilurinen, Diphenylethern, Aniliden, Organophosphaten, synthetischen Pyrethroiden, Neonicotinoiden, Oxadiazinen, Benzoylharnstoffen, Phenylcarbamaten, Chloracetamiden, Triketonen, Pyridincarbonsäuren, Cyclohexandionoximen, Phenylpyrazolen, Glyphosat und dessen Salzen, Oxyflurofen, Propanil, Chlorpyrifos, Bifenthrin, Deltamethrin, Azoxystrobin, Krexoxim-methyl, Lambda-Cyhalothrin, Novaluron, Lufenuron, Imidacloprid, Thiacloprid, Indoxacarb, Oxyfluorfen, Fluroxypyr und dessen Estern, Phenmedipham, Desmedipham, Acetochlor, Tebuconazol, Epoxiconazol, Propiconazol, Fenbuconazol, Triademenol, Fipronil und deren Gemischen.

## Revendications

1. Compositions agrochimiques, comprenant
(a) du lactate d'isoamyle ;
(b) des biocides choisis dans le groupe constitué d'azoles, strobilurines, éthers de diphényle, anilides, organophosphates, pyréthroïdes synthétiques, néonicotinoïdes, oxadiazines, benzoylurées, phényl-carbamates, chloroacétamides, tricétones, acides pyridinecarboxyliques, cyclohexanedione oximes, phénylpyrazoles, glyphosate et ses sels, oxyfluorfène, propanil, chlorpyrifos, bifenthrine, deltaméthrine, azoxystrobine, krexoxim-méthyl, lambda-cyhalothrine, novaluron, lufénuron, imidaclopride, thiaclopride, indoxacarbe, oxyfluorfène, fluroxypyr et ses esters, phenmédipham, desmédipham, acétochlor, tébuconazole, époxiconazole, propiconazole, fenbuconazole, triadéménol, fipronil et leurs mélanges ;
et facultativement
(c) des composants ou co-solvants huileux et/ou
(d) des émulsifiants.

2. Compositions selon la revendication 1, **caractérisées en ce qu'**elles comprennent en tant que composant (a) du lactate d'isoamyle obtenu à partir du d'huile de fusel.

3. Compositions selon l'une quelconque des revendications précédentes 1 ou 2, **caractérisées en ce qu'**elles comprennent des composants ou co-solvants huileux (composant c) choisis dans le groupe constitué d'alcools de Guerbet à base d'alcools gras ayant 6 à 18 atomes de carbone, esters d'acides gras en C₆-C₂₂ linéaires avec des alcools gras en C₆-C₂₂ linéaires ou ramifiés ou esters d'acides carboxyliques en C₆-C₁₃ ramifiés avec des alcools gras en C₆-C₂₂ linéaires ou ramifiés, esters méthyliques d'acides gras en C₆-C₂₂, esters d'acides gras en C₆-C₂₂ linéaires avec des alcools ramifiés, esters d'acides hydroxy-(alkyle en C₁₈-C₃₈) -carboxyliques avec des alcools gras en C₆-C₂₂ linéaires ou ramifiés, esters d'acides gras linéaires et/ou ramifiés avec des alcools polyhydriques et/ou des alcools de Guerbet, triglycérides à base d'acides gras en C₆-C₁₀, mélanges de mono-/di-/triglycérides liquides à base d'acides gras en C₆-C₁₈, esters d'alcools gras en C₆-C₂₂ et/ou d'alcools de Guerbet avec des acides carboxyliques aromatiques, esters d'acides dicarboxyliques en C₂-C₁₂ avec des alcools linéaires ou ramifiés ayant 1 à 22 atomes de carbone ou des polyols ayant 2 à 10 atomes de carbone et 2 à 6 groupes hydroxyle, huiles végétales, alcools primaires ramifiés, cyclohexanes substitués, carbonates d'alcool gras en C₆-C₂₂ linéaires et ramifiés, carbonates de Guerbet, à base d'alcools gras ayant 6 à 18, de préférence 8 à 10, atomes de carbone, esters de monopropylène glycol avec des acides en C₂-C₁₈ et l'acide benzoïque, esters d'acide benzoïque avec des alcools C₆-C₂₂ linéaires et/ou ramifiés, des éthers de dialkyle linéaires ou ramifiés, symétriques ou asymétriques ayant 6 à 22 atomes de carbone par groupe alkyle, produits d'ouverture d'esters d'acide gras époxydé avec des polyols, des huiles silicone et/ou des hydrocarbures aliphatiques ou naphténiques, des huiles minérales et leurs mélanges.

4. Compositions selon l'une quelconque des revendications précédentes 1 à 3, **caractérisées en ce que** lesdits composants huileux présentent une structure d'ester ou d'amide.

5. Compositions selon l'une quelconque des revendications précédentes 1 à 4, **caractérisées en ce que** lesdits composants huileux sont choisis dans le groupe constitué d'adipates, esters méthyliques d'huiles végétales, esters d'alkyle, alkylamides d'acide gras.

6. Compositions selon l'une quelconque des revendications précédentes 1 à 5, **caractérisées en ce qu'**elles comprennent des émulsifiants (composant d) choisis dans le groupe constitué de tensioactifs non ioniques et anioniques ou leurs mélanges.

7. Compositions selon l'une quelconque des revendications précédentes 1 à 6, **caractérisées en ce qu'**elles comprennent :
(a) 0,1 à 99 % en poids de lactate d'isoamyle ;
(b) 1 à 99,1 % en poids de biocides choisis dans le groupe constitué d'azoles, strobilurines, éthers de diphényle, anilides, organophosphates, pyréthroïdes synthétiques, néonicotinoïdes, oxadiazines, benzoylurées, phényl-carbamates, chloroacétamides, tricétones, acides pyridinecarboxyliques, cyclohexanedione oximes, phénylpyrazoles, glyphosate et ses sels, oxyfluorfène, propanil, chlorpyrifos, bifenthrine, deltaméthrine, azoxystrobine, krexoxim-méthyl, lambda-cyhalothrine, novaluron, lufénuron, imidaclopride, thiaclopride, indoxacarbe, oxyfluorfène, fluroxypyr et ses esters, phenmédipham, desmédipham, acétochlor, tébuconazole, époxiconazole, propiconazole, fenbuconazole, triadéménol, fipronil et leurs mélanges ;
(c) 0 à 50 % en poids de composants ou co-solvants huileux et
(d) 0 à 15 % en poids d'émulsifiants,
à condition que la somme des valeurs avec l'eau soit égale à 100 % en poids.

8. Utilisation de lactate d'isoamyle en tant que solvant ou dispersant pour des biocides choisis dans le groupe constitué d'azoles, strobilurines, éthers de diphényle, anilides, organophosphates, pyréthroïdes synthétiques, néonicotinoïdes, oxadiazines, benzoylurées, phényl-carbamates, chloroacétamides, tricétones, acides pyridinecarboxyliques, cyclohexanedione oximes, phénylpyrazoles, glyphosate et ses sels, oxyfluorfène, propanil, chlorpyrifos, bifenthrine, deltaméthrine, azoxystrobine, krexoxim-méthyl, lambda-cyhalothrine, novaluron, lufénuron, imidaclopride, thiaclopride, indoxacarbe, oxyfluorfène, fluroxypyr et ses esters, phenmédipham, desmédipham, acétochlor, tébuconazole, époxiconazole, propiconazole, fenbuconazole, triadéménol, fipronil et leurs mélanges.
